(19) **Europäisches Patentamt / European Patent Office / Office européen des brevets**

(11) **EP 2 784 035 B1**

(12) **EUROPEAN PATENT SPECIFICATION**

(45) Date of publication and mention of the grant of the patent:
**23.08.2017 Bulletin 2017/34**

(51) Int Cl.:
***C04B 7/32*** *(2006.01)*   ***C04B 28/14*** *(2006.01)*
***C04B 28/06*** *(2006.01)*

(21) Application number: **12851169.8**

(22) Date of filing: **12.11.2012**

(86) International application number:
**PCT/JP2012/079282**

(87) International publication number:
**WO 2013/077216 (30.05.2013 Gazette 2013/22)**

(54) **ULTRA RAPID HARDENING CLINKER, CEMENT COMPOSITION USING SAME, AND METHOD FOR PRODUCING SAME**

ULTRASCHNELL HÄRTENDER KLINKERSTEIN, ZEMENTZUSAMMENSETZUNG DAMIT UND HERSTELLUNGSVERFAHREN DAFÜR

CLINKER À DURCISSEMENT ULTRA-RAPIDE, COMPOSITION DE CIMENT L'UTILISANT ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2011 JP 2011253503**

(43) Date of publication of application:
**01.10.2014 Bulletin 2014/40**

(73) Proprietor: **Denka Company Limited**
**Tokyo 103-8338 (JP)**

(72) Inventors:
• **MORIOKA, Minoru**
 **Itoigawa-shi**
 **Niigata 949-0393 (JP)**
• **HIGUCHI, Takayuki**
 **Itoigawa-shi**
 **Niigata 949-0393 (JP)**
• **IWANAMI, Kazuhide**
 **Itoigawa-shi**
 **Niigata 949-0393 (JP)**
• **MORI, Taiichiro**
 **Itoigawa-shi**
 **Niigata 949-0393 (JP)**

(74) Representative: **Blodig, Wolfgang**
 **Wächtershäuser & Hartz**
 **Patentanwaltspartnerschaft mbB**
 **Weinstrasse 8**
 **80333 München (DE)**

(56) References cited:
JP-A- H05 139 795   JP-A- 2006 104 013
JP-A- 2007 320 833   JP-A- 2007 320 834
JP-A- 2007 320 835   JP-A- 2008 031 007
JP-A- 2010 189 226

**Description**

TECHNICAL FIELD

The present invention relates to an ultra rapid hardening clinker, a cement composition using the same and a process for producing the same, which are employed in the field of civil engineering and construction.

BACKGROUND ART

Infrastructure has been rapidly developed around the world, and a production volume of cement to be used has been increasing. In some countries where the development of infrastructure is enhanced, materials which can be used at an earlier stage have been required, and an ultra rapid hardening clinker may be mentioned as one of examples.

For example, in order to carry out rational construction, a cement material having ultra rapid hardening property and excellent fluidity is often needed. Heretofore, as the material having the ultra rapid hardening property and the excellent fluidity, a rapid-hardening and high-fluidity grout mortar has been proposed (see Patent Documents 1 to 3).

However, recently, in order to comply with further requirements for rational construction and new needs, performance required for an ultra rapid hardening material has been more increasing.

As the performance required for the rapid-hardening and high-fluidity grout mortar, a handling time is also important. When construction time and washing time for e.g. tools are also taken into consideration, it is desired to secure a handling time of at least 10 minutes, preferably at least 15 minutes. However, since a long handling time leads to a prolonged curing time, a strength required at a short-term material age is hardly satisfied. Accordingly, in a conventional technique, it is difficult to satisfy the strength development required at an initial material age, at a low temperature, while securing a sufficient handling time.

Further, a conventional rapid-hardening and high-fluidity grout mortar is largely dependent on temperature, and there is a problem in strength development under low-temperature environment. That is, the strength required at a prescribed material age is satisfied at a temperature of 20°C or higher, but the strength required at a prescribed material age is not satisfied at a low temperature of e.g. 5°C. This problem is common to an inorganic rapid-hardening and high-fluidity grout mortar and a resin mortar. Accordingly, a rapid-hardening and high-fluidity grout mortar having low temperature dependence has been desired.

On the other hand, it has been studied since a long time ago to add calcium aluminate to Portland cement, and further to use a gypsum in combination with them, for the purpose of imparting rapid hardening property, by Spackman et al. in US (see Patent Document 4).

However, a cement composition having a rapid hardening component made of calcium aluminate and a gypsum added thereto is largely dependent on temperature, and therefore sufficient rapid hardening property cannot be obtained at a low temperature. Further, depending on the mixed ratio of the calcium aluminate to the gypsum or the amount of a rapid hardening material to be added, the cement composition tends to excessively expand at a low temperature and thus is unreliable. Further, even when the placed surface of mortar or concrete is furnished by a trowel, the surface tends to be uneven due to hardening, such being undesirable from the viewpoint of appearance.

Recently, it has been studied to improve the above rapid hardening cement composition, and an ultra rapid hardening cement obtained by incorporating calcium aluminate, anhydrous gypsum and lithium carbonate into a Portland cement (Patent Document 5) or a mortar composition obtained by incorporating calcium aluminate, anhydrous gypsum, lithium carbonate, and slaked lime into a Portland cement (Patent Document 6) has been proposed.

However, such a mortar is not sufficiently improved to have strength development at a low temperature, and in addition, further has a difficulty in holdability of flowability.

PRIOR ART DOCUMENTS

PATENT DOCUMENTS

Patent Document 1: JP-A-3-12350
Patent Document 2: JP-A-1-230455
Patent Document 3: JP-A-11-139859
Patent Document 4: US Patent 903,019
Patent Document 5: JP-A-1-290543
Patent Document 6: JP-A-2005-75712

JP-A-2007-320835 discloses an extra-quick hardening cement composition containing cement, calcium aluminate having a $CaO/Al_2O_3$ mole ratio of 0.75-1.5, anhydrous gypsum, calcium hydroxide, a steel fiber having a tensile strength of 1,000 $N/mm^2$ or higher, lithium carbonate, alkali carbonates other than lithium carbonate, and an organic acid.

JP H05-139795 discloses a quick-setting cement having a chemical composition consisting of 30-55% CaO, 40-65% $Al_2O_3$ and <=15% $SiO_2$ and a mineral composition consisting of $CaO.Al_2O_3$ and/or $2CaO.Al_2O_3.SiO_2$ and having >=50% non- crystallinity.

JP-A-2007-320833 discloses an extra-quick hardening cement composition containing a clinker containing a $3CaO-SiO_2$ solid solution and $11CaO-7Al_2O_3-CaF_2$, anhydrous gypsum, an alumino-calcium silicate glass, a granulated blast furnace slag micropowder, a high-performance water reducer, a setting modifier, and a steel fiber with a tensile strength of 1,000 $N/mm^2$ or higher.

JP-A-2010-189226 discloses a hydraulic composition including (A) a powdery composition which has a $CaO/SiO_2$ (mole ratio) of 0.8-1.5, contains 1.0-12.0 mass% of $Al_2O_3$, and is mainly constituted of an amorphism, and (B) not less than one kind of stimulant selected from among portland cement, gypsum, alkali metal compounds, and alkaline earth metal compounds.

JP-A-2007-320834 discloses an ultra rapid hardening cement composition containing cement, calcium aluminate, gypsum, a setting modifier and a steel fiber having >=1,000 $N/mm^2$ tensile strength.

JP-A-2006-104013 discloses an extra quick hardening cement composition containing cement, calcium aluminate, gypsums, peroxide material, setting modifier and fluidizing agent.

JP-A-2008-031007 discloses a mortar or concrete composition containing cement, aggregate, a hardening accelerator and a dry shrinkage reducing agent.

DISCLOSURE OF INVENTION

TECHNICAL PROBLEM

It is an object of the present invention to provide an ultra rapid hardening clinker capable of providing a rapid-hardening and high-fluidity mortar or concrete composition, which has excellent flowability, sufficient handling time and low temperature dependence, while having high reliability from the viewpoints of long-term strength and durability; a cement composition using the same; and a process for producing the same.

SOLUTION TO PROBLEM

The present inventors have conducted extensive studies to accomplish the above object, and as a result, have found that the above objects can be accomplished by employing, as an ultra rapid hardening material, a hydraulic material having specific physical properties. The present invention has been accomplished on the basis of this discovery.

That is, the present invention provides the subject matter of claims 1 to 10.

ADVANTAGEOUS EFFECTS OF INVENTION

According to the ultra rapid hardening clinker, the cement composition using the same and the process for producing the same, of the present invention, it is possible to provide a rapid-hardening and high-fluidity grout mortar or concrete composition, which has excellent flowability, sufficient handling time and low temperature dependence, while having high reliability from the viewpoints of long-term strength and durability.

DESCRIPTION OF EMBODIMENTS

Now, the present invention will be described in detail.

"Parts" and "%" used in the present invention are by mass unless otherwise specified.

Further, the cement composition of the present invention generally refers to a cement composition, a mortar composition and a concrete composition.

The ultra rapid hardening clinker of the present invention comprises a $CaO-Al_2O_3-SiO_2$ compound, has an amorphousness of at least 70%, preferably at least 80%, and further has a true density after annealing at 1,000°C being smaller than before the annealing.

Usually, when an amorphous material is annealed to crystallize, a true density tends to be high, attributable to the change of a molecular alignment from irregular arrangement to regular arrangement. In the present invention, it is preferred that the true density after annealing at 1,000°C is smaller than before the annealing, preferably smaller by a range of from 0.01 to 0.2, particularly preferably smaller by a range of from 0.03 to 0.15.

In the present invention, the true density indicates a mass per unit volume of a material at an ideal state considering atom deficiency, dislocation and fine impurities, not considering gaps between particles or pores in the particles.

The $CaO-Al_2O_3-SiO_2$ compound in the present invention is a unique compound in that the true density after annealing at 1,000°C becomes smaller than before the annealing in spite of the amorphousness of at least 70%.

Here, the amorphousness in the present invention is defined as follows.

An object substance is annealed at 1,000°C for 2 hours, and then slowly cooled at a cooling rate of 5°C per minute to crystallize. Then, a resulting crystallized product is measured by a powder X-ray diffraction method to obtain an area S at a main peak of a crystal mineral. Then, an area So at a main peak of a crystal of the material before annealing is determined to obtain an amorphousness X by the following formula.

$$X\,(\%) = 100 \times (1\text{-}S_0/S)$$

The $CaO-Al_2O_3-SiO_2$ compound of the present invention is such that CaO is from 40 to 55%, $Al_2O_3$ is from 40 to 55%, and $SiO_2$ is from 1 to 7%, preferably such that CaO is from 43 to 53%, $Al_2O_3$ is from 43 to 53%, and $SiO_2$ is from 2 to 6%. If these components are not within the above ranges, it is difficult to obtain an ultra rapid hardening clinker capable of providing a rapid-hardening and high-fluidity grout mortar or concrete composition, which has excellent flowability, sufficient handling time and low temperature dependence, while having high reliability from the viewpoints of long-term strength, durability and appearance.

The CaO material may, for example, be quick lime, limestone or slaked lime. The $Al_2O_3$ material may, for example, be bauxite or aluminum residual ash. The $SiO_2$ material may, for example, be silica stone. Further, in a usual industrial material, impurities such as MgO, $Fe_2O_3$, $TiO_2$, $K_2O$ and $Na_2O$ are contained. These impurities tend to promote amorphousness of the $CaO-Al_2O_3-SiO_2$ compound, and they may be present in a total amount of at most 5%.

The $CaO-Al_2O_3-SiO_2$ compound of the present invention can be obtained only under limited conditions. It is necessary that the CaO material, the $Al_2O_3$ material and the $SiO_2$ material are mixed and then heat treated at a temperature of at least 1,600°C, preferably from 1,650 to 2,000°C, followed by rapid quenching. Such a compound cannot be obtained when a heat treatment temperature is less than 1,600°C or when the cooling rate does not satisfy the rapid quenching condition. It is necessary to satisfy both of these two conditions.

The rapid quenching of the present invention means to carry out cooling at a cooling rate of at least 1,000 K/sec. Especially, a temperature immediately before rapidly quenching a fluid in a state where a raw material is heated and melted at a temperature of at least 1,600°C is about 1,400°C, and a cooling rate from this state to 1,000°C is preferably at least 1,000 K/sec, more preferably from 2,000 to 100,000 K/sec.

In the present invention, an atmosphere for heat treatment is a reducing atmosphere. Here, the reducing atmosphere means a state where carbon monoxide is generated in a furnace in a nitrogen atmosphere and further an oxygen deficient state.

In an open system, it is difficult to accurately measure the concentration of carbon monoxide, but in a case where the concentration is measured above a melt in an electric furnace, it is possible to obtain a measurement value of at least 1 vol%. Further, when the concentration of oxygen is measured similarly, it is at most 10 vol%, usually at most 6 vol%. Since the oxygen concentration in an atmospheric pressure is 21 vol%, the state in the electric furnace is deficient in oxygen.

It is desired that the ultra rapid hardening clinker is in a powder form having a Blaine specific surface area of preferably from 4,000 to 9,000 $cm^2/g$, more preferably from 4,500 to 8,000 $cm^2/g$ as the fineness, by pulverization treatment. If the Blaine specific surface area is less than 4,000 $cm^2/g$ as the fineness, no sufficient ultra rapid hardening property or no sufficient strength development at a low temperature is obtained in some cases. Further, if it exceeds 9,000 $cm^2/g$, further improvement of the effects cannot be expected.

Further, a particle diameter of the ultra rapid hardening clinker is important, and it is desired to control the particle diameter by classification treatment. The ultra rapid hardening clinker has a content of particles having a particle diameter of less than 1.0 $\mu$m being preferably at most 10%, more preferably at most 5%. Further, the content of particles of more than 30 $\mu$m is preferably at most 10%, more preferably at most 5%.

When the particle diameter of the ultra rapid hardening clinker in a powder form is within the above range, e.g. the length change rate, the flowability, securing of the handling time, the initial strength development or the surface smoothness is readily achieved.

The pulverization method is not particularly limited, a commercial product may be used, and a ball mill or a roller mill may be used. Further, the classification method is also not particularly limited, but it is desired to control the fineness of the clinker by a gas stream classifier utilizing a Coanda effect.

The gas stream classifier utilizing a Coanda effect is one utilizing such properties that particles having smaller diameters tend to flow along a Coanda block nearby and particles having larger diameters tend to flow far away, because of a difference of an inertial force exerted on the particles when a pulverized product accelerated by e.g. an ejector is sprayed from a nozzle into a classification chamber in the presence of air as a carrier gas, and which is a gas stream classifier provided with a plurality of classification edge blocks each having a classification edge so as to collect a plurality of classification products according to the particle diameter. Such a classifier is disclosed in many patent documents (for example JP-A-7-178371), further there are many commercial products, and they may be used. The commercial products may, for example, be "Elbow-Jet" (trade name) manufactured by MATSUBO Corporation, or "Classiel" (trade name) manufactured by SEISHIN ENTERPRISE CO., LTD.

Regarding the particle diameter of the ultra rapid hardening clinker, in order to confirm the content of particles less than 1.0 $\mu$m and the content of particles more than 30 $\mu$m, it is possible to use a commercially available particle size distribution measuring device. As an example, a laser diffraction/scattering type particle size distribution analyzer LA-920, manufactured by HORIBA, Ltd. may be mentioned.

It is effective to use the ultra rapid hardening clinker in combination with gypsum. In the present invention, any gypsum may be used. Among them, anhydrous gypsum is preferred, II type anhydrous gypsum and/or natural anhydrous gypsum is more preferred, from the viewpoint of strength development.

The fineness of gypsum is preferably at least 4,000 cm$^2$/g, more preferably from 5,000 to 7,000 cm$^2$/g, as a Blain specific surface area. If it is less than 4,000 cm$^2$/g, the initial strength development tends to be deteriorated.

The amount of gypsum to be used is preferably from 25 to 200 parts, more preferably from 50 to 150 parts, most preferably from 75 to 125 parts, per 100 parts of the ultra rapid hardening clinker. If the amount is not within such a range, the strength development tends to be deteriorated.

The amount of a rapid hardening component comprising the ultra rapid hardening clinker and the gypsum is preferably from 10 to 35 parts, more preferably from 15 to 30 parts, most preferably from 20 to 25 parts, per 100 parts in total of a cement and the rapid hardening component. If it is less than 10 parts, the initial strength development tends to be low, and if it exceeds 35 parts, a great effect will not be obtained, and a long-term strength tends to be deteriorated.

In the present invention, it is possible to use a water reducing agent in combination. The water reducing agent generally refers to one having a dispersion action or an air entraining action to a cement, improving flowability and enhancing strength.

Specifically, a naphthalene sulfonic acid-based water reducing agent, a melamine sulfonic acid-based water reducing agent, a lignin sulfonic acid-based water reducing agent or a polycarboxylic acid-based water reducing agent may, for example, be mentioned, but it is not particularly limited thereto. Among them, a naphthalene sulfonic acid-based water reducing agent or a lignin sulfonic acid-based water reducing agent is preferred, and further combinational use thereof is more preferred with a view to achieving both of the strength development and holdability of flowability.

In the present invention, it is preferred to further use a setting modifier. The setting modifier can secure workability in construction, and is usually used in a powder form. The setting modifier may, for example, be an oxycarboxylic acid or its salt, their combinational use with an alkali metal carbonate, or saccharide. Among them, an oxycarboxylic acid and/or its salt is preferred from the viewpoints that a handling time for workability can be adjusted and that the strength development after curing is good.

As an acid constituting the oxycarboxylic acid or a salt thereof, citric acid, gluconic acid, tartaric acid or malic acid may, for example, be mentioned, and as the above salt, a sodium salt or a potassium salt of the above acid may, for example, be mentioned. One or more of them are used.

The amount of the setting modifier to be used differs depending upon e.g. an application, an operation time for construction or a composition of the setting modifier, and is hardly unambiguously determined. In the present invention, the amount of the setting modifier to be used is adjusted so that a cement mortar composition is hardened in accordance with operation time of from 15 to 30 minutes.

The amount of the setting modifier to be used is preferably from 0.05 to 0.5 part, more preferably from 0.1 to 0.3 part, most preferably from 0.15 to 0.3 part, per 100 parts in total of the cement, the ultra rapid hardening clinker, gypsum and the fine aggregate. If it is not within the above range, a sufficient operation time cannot be secured, and hardening tends to be delayed.

In the present invention, for the purpose of imparting unshrinkable property, it is possible to use a gas foaming substance in combination. When the ultra rapid hardening clinker is incorporated into a grout material, the gas foaming substance integrates structures and therefore serves to suppress sinking or shrinking of a rapid-hardening and high-fluidity grout mortar which is not yet hardened.

As a specific example of the gas foaming substance, not only an aluminum powder or a carbon substance, but also a nitrogen gas foaming substance, or a peroxide substance such as a percarbonate, a persulfate, a perborate or a permanganate may be mentioned. In the present invention, it is preferred to use a carbon substance or a peroxide substance such as a percarbonate, a persulfate, a perborate or a permanganate since an effect of suppressing sinking is large. Among them, it is more preferred to use a nitrogen gas foaming substance or percarbonate.

As the nitrogen gas foaming substance, at least one member selected from the group consisting of an azo compound, a nitroso compound and a hydrazine derivative may be used. For example, azodicarbonamide or azobisisobutyronitrile may be mentioned as the azo compound.

As the nitroso compound, N,N'-dinitropentamethylenetetramine may, for example, be mentioned. As the hydrazine derivative, 4,4'-oxybis or hydrazinecarbonamide may, for example, be mentioned.

In the present invention, one or more of them may be used. Such a nitrogen gas foaming substance generates nitrogen gas in an alkaline atmosphere at the time of kneading a basic cement with water, and may produce gas such as carbon monoxide, carbon dioxide or ammonia as a by-product.

The blend ratio of the gas foaming substance is not particularly limited, but is usually from 0.0001 to 0.1 part, more preferably from 0.001 to 0.01 part per 100 parts of a binder, in the case of an aluminum powder or a peroxide substance. It is preferably from 0.005 to 1 part, more preferably from 0.01 to 0.5 part, in a case where the gas foaming substance is a nitrogen gas foaming substance. Further, it is from 1 to 15 parts, preferably from 3 to 10 parts, per 100 parts of the binder, in a case where the gas foaming substance is a carbon substance. When the blend ratio is less than the lower limit of the preferred range, no sufficient initial expansion effect may be imparted, and if it exceeds the upper limit of the preferred range, the strength development tends to be poor due to excess expansion.

As a cement to be used in the present invention, various Portland cements such as ordinary, high-early-strength, ultra high-early-strength, low heat and moderate-heat Portland cements, various blended cements having blast furnace slag, fly ash, silica or lime stone fine powder mixed in the above Portland cements, or a waste recycle type cement, so-called eco cement may, for example, be mentioned. Among them, ordinary Portland cement or high-early-strength Portland cement is preferred in view of kneading property and strength development.

In the present invention, one or more among admixtures such as a limestone fine powder, a slowly cooled blast furnace slag fine powder, a sewage sludge incineration ash or a molten slag, a municipal waste incineration ash or a molten slag thereof and a pulp sludge incineration ash, an water reducing agent, an AE water reducing agent, a high performance water reducing agent, a high performance AE water reducing agent, a defoaming agent, a thickener, a rust-preventive agent, an anti-freezer, a shrinkage-reducing agent, a polymer, a setting modifier, a clay mineral such as bentonite, and an anion exchanger such as hydrotalcite, may be used within a range not to substantially impair the object of the present invention.

In the present invention, a fine aggregate may be used in combination. The fine aggregate is not particularly limited so long as a moderate construction performance and strength development can be obtained. Among them, silica sand is preferred. As the fine aggregate, dry sand is preferred. As the dry sand, absolutely dry sand is preferred.

The amount of the fine aggregate to be used is preferably from 30 to 200 parts, more preferably from 100 to 190 parts, most preferably from 130 to 170 parts, per 100 parts of a binder. If it is less than 50 parts, the construction performance tends to deteriorate, and if it exceeds 150 parts, the strength tends to deteriorate.

The binder in the present invention comprises e.g. cement, the ultra rapid hardening clinker, gypsum, the setting modifier and, as the case requires, the water reducing agent.

The amount of water to be kneaded in the present invention is not particularly limited, but is usually preferably from 25 to 70%, more preferably from 30 to 50% as a water/binder ratio. If the amount is not within such a range, the construction performance tends to significantly deteriorate, or the strength tends to deteriorate.

EXAMPLES

Now, the present invention will be described in further detail with reference to Examples, but it should be understood that the present invention is by no means restricted to these Examples.

[Test Example 1]

A clinker pulverized product as shown in Table 1 was annealed at 1,000°C for 2 hours under a reducing atmosphere with an oxygen concentration of 3 vol%, a nitrogen concentration of 95 vol% and a carbon monoxide concentration of 2 vol%, and then slowly cooled at a cooling rate of 5°C per minute to measure true densities before and after the annealing. Further, the amorphousness was also measured. The results are also shown in Table 1. Here, as clinker materials, quick lime was used as a CaO material, bauxite was used as an $Al_2O_3$ material, and silica stone was used as a $SiO_2$ material.

<Materials used>

Clinker pulverized product A: True density: 2.97 $g/cm^3$, amorphousness: 95%, CaO: 51 %, $Al_2O_3$: 43%, $SiO_2$: 3%, others: 3%. Heating temperature: 1,700°C, cooling rate of from 1,400°C to 1,000°C: 8,000 K/sec. Blain specific surface area: 5,000 $cm^2/g$. Particle diameter of less than 1.0 μm: 1.0%, particle diameter of more than 30 μm: 1.0%.

Clinker pulverized product B: True density: 2.98 $g/cm^3$, amorphousness: 95%, CaO: 45%, $Al_2O_3$: 47%, $SiO_2$: 4%, others: 4%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product C: True density: 2.94 g/cm$^3$, amorphousness: 95%, CaO: 43%, Al$_2$O$_3$: 46%, SiO$_2$: 7%, others: 4%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product D: True density: 2.99 g/cm$^3$, amorphousness: 95%, CaO: 52%, Al$_2$O$_3$: 40%, SiO$_2$: 4%, others: 4%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product E: True density: 2.95 g/cm$^3$, amorphousness: 95%, CaO: 50%, Al$_2$O$_3$: 46%, SiO$_2$: 2%, others: 2%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product F: True density: 2.97 g/cm$^3$, amorphousness: 95%, CaO: 46%, Al$_2$O$_3$: 46%, SiO$_2$: 4%, others: 4%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product G: True density: 2.90 g/cm$^3$, amorphousness: 95%, CaO: 44%, Al$_2$O$_3$: 50%, SiO$_2$: 3%, others: 3%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product H: True density: 2.98 g/cm$^3$, amorphousness: 95%, CaO: 46%, Al$_2$O$_3$: 51 %, SiO$_2$: 1 %, others: 2%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product I: True density: 3.00 g/cm$^3$, amorphousness: 95%, CaO: 55%, Al$_2$O$_3$: 40%, SiO$_2$: 3%, others: 2%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product J: True density: 3.02 g/cm$^3$, amorphousness: 95%, CaO: 57%, Al$_2$O$_3$: 40%, SiO$_2$: 2%, others: 1%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product K: True density: 2.88 g/cm$^3$, amorphousness: 95%, CaO: 40%, Al$_2$O$_3$: 57%, SiO$_2$: 2%, others: 1%. Heating temperature: 1,700°C, cooling rate of from 1,400°C to 1,000°C: 8,000 K/sec. Blain specific surface area: 5,000 cm$^2$/g. Particle diameter of less than 1.0 μm: 1.0%, particle diameter of more than 30 μm: 1.0%.

Clinker pulverized product L: True density: 2.97 g/cm$^3$, amorphousness: 90%, CaO: 45%, Al$_2$O$_3$: 47%, SiO$_2$: 4%, others: 4%. Heating temperature: 1,700°C, cooling rate of from 1,400°C to 1,000°C: 7,000 K/sec. Blain specific surface area: 5,000 cm$^2$/g. Particle diameter of less than 1.0 μm: 1.0%, particle diameter of more than 30 μm: 1.0%.

Clinker pulverized product M: True density: 2.96 g/cm$^3$, amorphousness: 80%, CaO: 45%, Al$_2$O$_3$: 47%, SiO$_2$: 4%, others: 4%. Heating temperature: 1,700°C, cooling rate of from 1,400°C to 1,000°C: 6,000 K/sec. Blain specific surface area: 5,000 cm$^2$/g. Particle diameter of less than 1.0 μm: 1.0%, particle diameter of more than 30 μm: 1.0%.

Clinker pulverized product N: True density: 2.95 g/cm$^3$, amorphousness: 70%, CaO: 45%, Al$_2$O$_3$: 47%, SiO$_2$: 4%, others: 4%. Heating temperature: 1,700°C, cooling rate of from 1,400°C to 1,000°C: 5,000 K/sec. Blain specific surface area: 5,000 cm$^2$/g. Particle diameter of less than 1.0 μm: 1.0%, particle diameter of more than 30 μm: 1.0%.

Clinker pulverized product O: True density: 2.94 g/cm$^3$, amorphousness: 50%, CaO: 45%, Al$_2$O$_3$: 47%, SiO$_2$: 4%, others: 4%. Heating temperature: 1,700°C, cooling rate of from 1,400°C to 1,000°C: 4,000 K/sec. Blain specific surface area: 5,000 cm$^2$/g. Particle diameter of less than 1.0 μm: 1.0%, particle diameter of more than 30 μm: 1.0%.

<Measuring methods>

Amorphousness: An object substance is annealed at 1,000°C for 2 hours, and then slowly cooled at a cooling rate of 5°C/min to crystallize. Then, the crystallized product is measured by a powder X-ray diffraction method to determine an area So of the main peak of a crystalline mineral. Then, from an area S of the main peak of a crystal of the material before the annealing, an amorphousness X was determined by the formula of X (%) = 100 × (1-S/S$_0$).

True density: Measured in accordance with a gas phase substitution method based on the principle of Archimedes, by a multipycnometer.

Blain specific surface area: Measured in accordance with JIS R5201-1997 Physical testing methods for cement.

Content of particles having a particle diameter of less than 1.0 μm or a particle diameter of more than 30 μm: A laser diffraction/scattering type particle size distribution measuring device LA-920, manufactured by HORIBA, Ltd. was used. A clinker pulverized and classified was subjected to ultrasonic dispersion in ethanol to measure particle size distribution at a relative refractive index of 130a0001. From this particle size distribution, the content of particles having a particle diameter of less than 1.0 μm or more than 30 μm was determined.

[Table 1]

| Test No. | Clinker pulverized product | True density before annealing (g/cm$^3$) | True density after annealing (g/cm$^3$) | Amorphousness (%) | Notes |
|---|---|---|---|---|---|
| 1-1 | A | 2.97 | 2.86 | 95 | Ex. |
| 1-2 | B | 2.98 | 2.89 | 95 | Ex. |
| 1-3 | C | 2.94 | 2.93 | 95 | Ex. |
| 1-4 | D | 2.99 | 2.91 | 95 | Ex. |
| 1-5 | E | 2.95 | 2.85 | 95 | Ex. |
| 1-6 | F | 2.97 | 2.87 | 95 | Ex. |
| 1-7 | G | 2.90 | 2.85 | 95 | Ex. |
| 1-8 | H | 2.98 | 2.86 | 95 | Ex. |
| 1-9 | I | 3.00 | 2.96 | 95 | Ex. |
| 1-10 | J | 3.02 | 3.11 | 95 | Comp. Ex. |
| 1-11 | K | 2.88 | 2.94 | 95 | Comp. Ex. |
| 1-12 | L | 2.97 | 2.90 | 90 | Ex. |
| 1-13 | M | 2.96 | 2.92 | 80 | Ex. |
| 1-14 | N | 2.95 | 2.94 | 70 | Ex. |
| 1-15 | O | 2.94 | 2.94 | 50 | Comp. Ex. |

In Table 1, the clinker pulverized products A to I, L, M and N comprise a CaO-Al$_2$O$_3$-SiO$_2$ compound, have an amorphousness of at least 70%, and further have a true density after annealing at 1,000°C being smaller than before the annealing, wherein CaO is from 40 to 55%, Al$_2$O$_3$ is from 40 to 55%, and SiO$_2$ is from 1 to 7%. On the other hand, the clinker pulverized products J, K and O have a true density after annealing at 1,000°C being not smaller than before the annealing.

[Test Example 2]

Using each clinker pulverized product shown in Table 1, a binder comprising 70 parts of cement, 15 parts of the clinker and 15 parts of anhydrous gypsum, was prepared, and into 100 parts of the binder, 1.0 part of an alkali carbonate, 0.2 part of an organic acid, 0.5 part of a fluidizing agent, 0.05 part of a gas foaming substance and 150 parts of a fine aggregate were blended to prepare a mortar composition under conditions where both of a material temperature and room temperature were 5°C. At that time, 37 parts of kneading water per 100 parts in total of the binder was used. The flowability of a mortar, the handling time, the initial expansion, the length change rate and the compressive strength were measured. The results are also shown in Table 2.

<Materials used>

Cement: Commercially available ordinary Portland cement (manufactured by Denki Kagaku Kogyo Kabushiki Kaisha)
Anhydrous gypsum: II-Type anhydrous gypsum, pH: 3.0, Blain specific surface area: 5,000 cm$^2$/g
Alkali carbonate: First grade reagent potassium carbonate
Organic acid: First grade reagent citric acid
Fluidizing agent: Commercially available naphthalene (manufactured by Kao Corporation)
Gas foaming substance: Nitrogen gas foaming substance, azodicarbonamide, commercial product (manufactured by Sankyo Kasei Co., Ltd.)
Water: Tap water

Fine aggregate: Silica sand

<Measuring methods>

Flowability: A funnel-flow value $J_{14}$ was measured in accordance with JSCE-F 541-2010 Flowability test method of filled mortar to evaluate the flowability. A range of from 8 to 10 seconds is regarded as pass .

Handling time: A time when a temperature was increased by 1 °C from a kneading completion temperature was regarded as a handling time. 10 minutes or more is regarded as pass .

Initial expansion rate: An initial expansion rate was measured in accordance with the Japan Society of Civil Engineering Expansion concrete designing and construction guideline (draft) Appendix 2. Annex construction procedure (draft) of filled mortar using expansive additive . + in each Table shows an expansion side.

Length change rate: A length change rate was measured in accordance with JIS A6202-1997 expansive additive for concrete . A range of from +200 to +1,000 ($\times 10^{-6}$) is regarded as pass . If it is less than +200 ($\times 10^{-6}$), a shrinkage compensation effect is not sufficient, and on the other hand if it exceeds +1,000 ($\times 10^{-6}$), excess expansion tends to occur.

Compressive strength: Mortar was filled in a frame to prepare a molded product of 4 cm $\times$ 4 cm $\times$ 16 cm, and the compressive strengths at the material ages of 1 hour and 3 hours were measured in accordance with JIS R 5201-1997 Physical testing methods for cement. In the case of the strength at the material age of 1 hour, at least 10 N/mm$^2$ is regarded as pass , and in the case of the strength at the material age of 3 hours, at least 20 N/mm$^2$ is regarded as pass .

Mortar smoothness: Mortar was filled in a mold of 20 cm $\times$ 20 cm $\times$ 4 cm to smoothly finish the surface of the mortar. After hardening, the surface of the mortar was observed. A case where the surface was still even is represented by ◎, a case where the surface was mostly even though the surface was somewhat uneven, is represented by ○, and a case where the surface was conspicuously uneven, is represented by △.

[Table 2]

| Test No. | Clinker pulverized product | Flowability (sec) | Handling time (min) | Initial expansion rate (%) | Length change rate ($\times 10^{-6}$) | Compressive strength (N/mm$^2$) | | Surface smoothness | Notes |
|---|---|---|---|---|---|---|---|---|---|
| | | | | | | 1 Hour | 3 Hours | | |
| 2-1 | A | 8.9 | 15 | +0.31 | +650 | 18.1 | 24.9 | ◎ | Ex. |
| 2-2 | B | 8.4 | 35 | +0.40 | +450 | 17.8 | 27.7 | ◎ | Ex. |
| 2-3 | C | 8.3 | 45 | +0.35 | +340 | 10.9 | 23.8 | ◎ | Ex. |
| 2-4 | D | 9.3 | 12 | +0.34 | +800 | 19.5 | 22.4 | ◎ | Ex. |
| 2-5 | E | 8.3 | 25 | +0.33 | +370 | 18.0 | 25.5 | ○ | Ex. |
| 2-6 | F | 8.7 | 20 | +0.30 | +530 | 18.5 | 26.1 | ◎ | Ex. |
| 2-7 | G | 8.2 | 45 | +0.31 | +320 | 10.3 | 24.5 | ○ | Ex. |
| 2-8 | H | 8.6 | 25 | +0.42 | +500 | 19.0 | 25.0 | ○ | Ex. |
| 2-9 | I | 9.5 | 10 | +0.32 | +850 | 20.1 | 23.6 | ○ | Ex. |
| 2-10 | J | 10.5 | 5 | +0.25 | +1300 | 11.3 | 16.2 | △ | Comp. Ex. |
| 2-11 | K | 8.3 | 75 | +0.24 | +150 | - | 8.7 | △ | Comp. Ex. |
| 2-12 | L | 8.4 | 37 | +0.38 | +420 | 17.0 | 27.1 | ◎ | Ex. |
| 2-13 | M | 8.5 | 40 | +0.36 | +400 | 15.2 | 26.2 | ◎ | Ex. |
| 2-14 | N | 8.6 | 45 | +0.34 | +350 | 10.3 | 24.4 | ○ | Ex. |
| 2-15 | O | 8.9 | 65 | +0.31 | +220 | - | 15.8 | △ | Comp. Ex. |

As shown in Table 2, in the case of the clinker pulverized products A to I, L, M and N comprising a CaO-$Al_2O_3$-$SiO_2$ compound, which have an amorphousness of at least 70%, and further have a true density after annealing at 1,000°C being smaller than before the annealing, wherein CaO is from 40 to 55%, $Al_2O_3$ is from 40 to 55%, and $SiO_2$ is from 1 to 7%, it is found that the flowability is excellent, a sufficient handling time can be secured, the dimensional stability is excellent, and the strength development is also excellent.

On the other hand, in the case of the clinker pulverized products J, K and O which have a true density after annealing at 1,000°C being not smaller than before the annealing, it is found that the flowability is poor, a sufficient handling time cannot be secured, or on the contrary, the handling time is too long, so the initial strength development is poor, or the dimensional stability deteriorates.

[Test Example 3]

This test was carried out in the same manner as in Test Example 2 except that the mixture in Test No. 2-2 was used, and that ambient temperature was changed as shown in Table 3. The results are also shown in Table 3.

[Table 3]

| Test No. | Ambient temperature (°C) | Flowability (sec) | Handling time (min) | Initial expansion rate (%) | Length change rate (×10⁻⁶) | Compressive strength (N/mm²) | | Surface smoothness | Notes |
|---|---|---|---|---|---|---|---|---|---|
| | | | | | | 1 Hour | 3Hour | | |
| 2-2 | 5 | 8.4 | 35 | +0.40 | +450 | 17.8 | 27.7 | ◎ | Ex. |
| 3-1 | 20 | 8.3 | 30 | +0.38 | +430 | 18.5 | 28.8 | ◎ | Ex. |
| 3-2 | 30 | 8.2 | 25 | +.033 | +410 | 19.5 | 30.6 | ◎ | Ex. |

As shown in Table 3, it is found that the temperature dependency is low, the stable performance can be obtained, and the surface smoothness is excellent, when the clinker pulverized product of the present invention is applied.

[Test Example 4]

This experiment was carried out in the same manner as in Test Example 1 except that the clinker pulverized product was fixed to B, and that the concentration of gas flown into a fixed electric furnace was changed as shown in Table 4. The results are shown in Table 4. Further, the physical properties of mortar were evaluated in the same manner as in Examples 2. The results are shown in Table 5.

[Table 4]

| Test No. | Clinker pulverized product | Gas concentration (vol%) | | | True density before annealing $(g/cm^3)$ | True density after annealing $(g/cm^3)$ | Amorphousness (%) | Notes |
|---|---|---|---|---|---|---|---|---|
| | | $N_2$ | $O_2$ | CO | | | | |
| 4-1 | B | 97 | 1 | 2 | 2.98 | 2.89 | 95 | Ex. |
| 1-2 | B | 95 | 3 | 2 | 2.98 | 2.89 | 95 | Ex. |
| 4-2 | B | 92 | 6 | 2 | 2.95 | 2.89 | 90 | Ex. |
| 4-3 | B | 88 | 10 | 2 | 2.93 | 2.89 | 80 | Ex. |
| 4-4 | B | 83 | 15 | 2 | 2.87 | 2.89 | 60 | Comp. Ex. |
| 4-5 | B | 78 | 20 | 2 | 2.85 | 2.89 | 50 | Comp. Ex. |

[Table 5]

| Test No. | Clinker pulverized product | Flowability (sec) | Handling time (min) | Initial expansion rate (%) | Length change rate ($\times 10^{-6}$) | Compressive strength (N/mm$^2$) | | Surface smoothness | Notes |
|---|---|---|---|---|---|---|---|---|---|
| | | | | | | 1 Hour | 3 Hours | | |
| 5-1 | Test No. 4-1 B | 8.3 | 35 | +0.40 | +450 | 17.7 | 27.0 | ◎ | Ex. |
| 2-2 | Test No. 1-2 B | 8.4 | 35 | +0.40 | +450 | 17.8 | 27.7 | ◎ | Ex. |
| 5-2 | Test No. 4-2 B | 8.4 | 36 | +0.40 | +445 | 17.5 | 27.6 | ◎ | Ex. |
| 5-3 | Test No. 4-3 B | 8.3 | 38 | +0.40 | +440 | 16.5 | 26.8 | ◎ | Ex. |
| 5-4 | Test No. 4-4 B | 8.3 | 46 | +0.38 | +440 | 9.5 | 21.2 | △ | Comp. Ex. |
| 5-5 | Test No. 4-5 B | 8.4 | 60 | +0.35 | +440 | 9.5 | 16.1 | △ | Comp. Ex. |

[Test Example 5]

The clinker P was pulverized and then classifier into fine particles, medium particles and coarse particles by means of a gas stream classifier, thereafter the fine particles, the medium particles and the coarse particles were blended so as to have a Blain specific surface area, a content of particles of less than 1.0 $\mu$m and a content of particles of more than 30.0 $\mu$m as shown in Table 6, and then the physical properties of the mortar were evaluated in the same manner as in Test Example 2.

<Materials used>

Clinker P: Density: 2.98, amorphousness: 95%, CaO: 45%, Al$_2$O$_3$: 47%, SiO$_2$: 4%, others: 4%. Heating temperature: 1,700°C, cooling rate of from 1,400°C to 1,000°C: 8,000 K/sec.

<Device used>

Gas stream classifier: Tradename Elbow-Jet PURO , manufactured by MATSUBO Corporation.

[Table 6]

| Test No. | Blaine specific surface area (cm²/g) | Content of particles less than 1.0 μm (%) | Content of particles more than 30.0 μm (%) | Initial expansion rate (%) | Length change rate ×10⁻⁶ | Flowability (sec) | Handling time (min) | Compressive strength (N/mm²) | | Surface smoothness | Notes |
|---|---|---|---|---|---|---|---|---|---|---|---|
| | | | | | | | | 1 Hour | 3 Hours | | |
| 6-1 | 4000 | 2.0 | 24.3 | +0.35 | +300 | 7.9 | 45 | 10.6 | 20.8 | △ | Ex. |
| 6-2 | 4000 | 0.9 | 18.5 | +0.35 | +350 | 8.1 | 40 | 11.5 | 21.0 | ○ | Ex. |
| 6-3 | 4000 | 0 | 11.8 | +0.35 | +390 | 8.3 | 38 | 12.0 | 22.3 | ○ | Ex. |
| 6-4 | 4000 | 0 | 10.0 | +0.35 | +400 | 8.3 | 36 | 13.8 | 24.0 | ◎ | Ex. |
| 6-5 | 5000 | 5.7 | 5.0 | +0.35 | +390 | 9.3 | 27 | 15.8 | 24.5 | ◎ | Ex. |
| 6-6 | 5000 | 3.8 | 2.5 | +0.40 | +430 | 8.8 | 32 | 16.3 | 25.3 | ◎ | Ex. |
| 2-2 | 5000 | 1.0 | 1.0 | +0.40 | +450 | 8.4 | 35 | 17.8 | 27.7 | ◎ | Ex. |
| 6-7 | 5000 | 0.1 | 0.1 | +0.41 | +480 | 8.3 | 40 | 18.9 | 28.9 | ◎ | Ex. |
| 6-8 | 5000 | 0 | 0 | +0.41 | +510 | 8.2 | 45 | 20.2 | 30.7 | ◎ | Ex. |
| 6-9 | 6500 | 0.2 | 0 | +0.40 | +520 | 8.3 | 41 | 20.0 | 29.8 | ◎ | Ex. |
| 6-10 | 6800 | 2.2 | 0 | +0.40 | +500 | 8.5 | 35 | 21.0 | 29.5 | ◎ | Ex. |
| 6-11 | 6800 | 5.8 | 0 | +0.39 | +450 | 8.6 | 31 | 20.5 | 28.9 | ◎ | Ex. |
| 6-12 | 6900 | 7.7 | 0 | +0.35 | +380 | 9.0 | 24 | 20.0 | 28.8 | ○ | Ex. |
| 6-13 | 7000 | 10.0 | 0 | +0.34 | +350 | 9.4 | 19 | 21.0 | 27.9 | ○ | Ex. |
| 6-14 | 7000 | 12.0 | 0 | +0.30 | +330 | 9.9 | 13 | 21.0 | 27.8 | ○ | Ex. |

INDUSTRIAL APPLICABILITY

According to a cement composition using the ultra rapid hardening clinker of the present invention, excellent flowability and sufficient handling time can be secured, excellent strength development in a short time and a small temperature dependence can also be achieved, and therefore the cement composition can widely be utilized for civil engineering and construction, and is suitably used for e.g. a gap filling material, a self leveling floor material or a lining material.

**Claims**

1.    A process for preparing an ultra rapid hardening clinker comprising a $CaO-Al_2O_3-SiO_2$ compound, which has an amorphousness of at least 70%, and further has a true density after annealing at 1,000°C being smaller than before the annealing,
wherein, in the ultra rapid hardening clinker, on a mass basis, CaO is from 40 to 55%, $Al_2O_3$ is from 40 to 55%, and $SiO_2$ is from 1 to 7%,
wherein the process comprises mixing a CaO material, an $Al_2O_3$ material and a $SiO_2$ material, heat treating the mixture at 1,600°C or higher, followed by rapid quenching at a cooling rate of at least 1,000 K/sec, and
wherein the heat treatment is carried out under a reducing atmosphere with a carbon monoxide concentration of at least 1 vol% and an oxygen concentration of at most 10 vol% in a nitrogen atmosphere.

2.    The process for producing an ultra rapid hardening clinker according to Claim 1, wherein the CaO material is quicklime, the $Al_2O_3$ material is bauxite, and the $SiO_2$ material is silica rock.

3.    The process for producing an ultra rapid hardening clinker according to Claims 1 or 2, wherein the rapid quenching is carried out at a quenching rate of at least 50,000 K/sec.

4.    A ultra rapid hardening clinker obtainable by the process according any one of claims 1 to 3.

5.    The ultra rapid hardening clinker according to Claim 4, which is powdered, has a Blaine specific surface area of from 4,000 to 9,000 $cm^2/g$, and has a content of particles of more than 30 $\mu$m being at most 10% on a mass basis.

6.    The ultra rapid hardening clinker according to Claim 4 or 5, which has a content of particles having a particle diameter of less than 1.0 $\mu$m being at most 10% on a mass basis.

7.    A cement composition obtained by incorporating the ultra rapid hardening clinker as defined in any one of Claims 4 to 6.

8.    The cement composition according to Claim 7, which contains gypsum in an amount of from 25 to 200 parts by mass, per 100 parts by mass of the ultra rapid hardening clinker.

9.    A binder comprising the cement composition as defined in Claim 7 or 8.

10.    The binder according to Claim 9, further containing at least one member selected from the group consisting of a setting modifier, a gas foaming substance and a fine aggregate, and further containing a water reducing agent as the case requires.

**Patentansprüche**

1.    Verfahren zur Herstellung eines ultraschnell härtenden Klinkers, der eine $CaO-Al_2O_3-SiO_2$-Verbindung umfasst, welche eine Amorphizität von wenigstens 70% aufweist und ferner eine Reindichte nach dem Sintern bei 1000°C aufweist, die kleiner als vor dem Sintern ist, wobei in dem ultraschnell härtenden Klinker, auf Massenbasis, das CaO mit von 40 bis 55% vorliegt, das $Al_2O_3$ mit von 40 bis 55% vorliegt und das $SiO_2$ mit von 1 bis 7% vorliegt, wobei das Verfahren das Mischen eines CaO-Materials, eines $Al_2O_3$-Materials und eines $SiO_2$-Materials und Wärmebehandeln der Mischung bei 1.600°C oder höher, gefolgt von einem schnellen Abschrecken mit einer Abkühlgeschwindigkeit von wenigstens 1.000 K/sec umfasst, und wobei die Wärmebehandlung unter einer reduzierenden Atmosphäre mit einer Kohlenmonoxid-Konzentration von wenigstens 1 Volumenprozent und einer SauerstoffKonzentration von höchstens 10 Volumenprozent in Stickstoffatmosphäre durchgeführt wird.

**2.** Verfahren zur Herstellung eines ultraschnell härtenden Klinkers nach Anspruch 1, wobei das CaO-Material Branntkalk ist, das $Al_2O_3$-Material Bauxit ist und das $SiO_2$-Material Silikatgestein ist.

**3.** Verfahren zur Herstellung eines ultraschnell härtenden Klinkers nach Anspruch 1 oder 2, wobei das schnelle Abschrecken mit einer Abschreckgeschwindigkeit von wenigstens 50.000 K/sec durchgeführt wird.

**4.** Ultraschnell härtender Klinker, der nach dem Verfahren nach einem der Ansprüche 1 bis 3 erhältlich ist.

**5.** Ultraschnell härtender Klinker nach Anspruch 4, welcher gemahlen ist, eine spezifische Oberfläche nach Blaine von 4.000 bis 9.000 $cm^2$/g aufweist, und einen Gehalt an Partikeln von mehr als 30 $\mu$m aufweist, der höchstens 10% auf Massenbasis beträgt.

**6.** Ultraschnell härtender Klinker nach Anspruch 4 oder 5, welcher einen Gehalt an Partikeln mit einem Partikeldurchmesser von weniger als 1,0 $\mu$m aufweist, der höchstens 10% auf Massenbasis beträgt.

**7.** Zementzusammensetzung, die durch Aufnahme des wie in einem der Ansprüche 4 bis 6 definierten ultraschnell härtenden Klinkers erhalten wird.

**8.** Zementzusammensetzung nach Anspruch 7, welche Gips in einer Menge von 25 bis 250 Masseanteilen pro 100 Masseanteilen des ultraschnell härtenden Klinkers enthält.

**9.** Bindemittel, umfassend die wie in Anspruch 7 oder 8 definierte Zementzusammensetzung.

**10.** Bindemittel nach Anspruch 9, ferner wenigstens ein Element enthaltend, ausgewählt aus der Gruppe, bestehend aus einem Abbinderegulierer, einer ein Gas bildenden Substanz, und einem Feinzuschlagstoff, und ferner, wie erforderlich, ein Reduktionsmittel für Wasser enthaltend.

## Revendications

**1.** Procédé pour préparer une scorie à durcissement ultra rapide comprenant un composé $CaO-Al_2O_3-SiO_2$, qui présente une amorphie d'au moins 70 % et présente en outre une densité absolue après un recuit à 1 000°C qui est inférieure à celle avant le recuit,

dans lequel, dans la scorie à durcissement ultra rapide, sur une base en masse, CaO représente de 40 à 55 %, $Al_2O_3$ représente de 40 à 55 %, et $SiO_2$ représente de 1 à 7 %,

lequel procédé comprend le mélange d'un matériau CaO, d'un matériau $Al_2O_3$ et d'un matériau $SiO_2$, le traitement à la chaleur du mélange à 1600°C ou plus, suivi d'une trempe rapide à une vitesse de refroidissement d'au moins 1 000 K/s, et

dans lequel le traitement à la chaleur est effectué dans une atmosphère réductrice avec une concentration de monoxyde de carbone d'au moins 1 % en volume et une concentration d'oxygène d'au plus 10 % en volume dans une atmosphère d'azote.

**2.** Procédé pour produire une scorie à durcissement ultra rapide selon la revendication 1, dans lequel le matériau CaO est la chaux vive, le matériau $Al_2O_3$ est la bauxite, et le matériau $SiO_2$ est la roche siliceuse.

**3.** Procédé pour produire une scorie à durcissement ultra rapide selon la revendication 1 ou 2, dans lequel la trempe rapide est effectuée à une vitesse de trempe d'au moins 50 000 K/s.

**4.** Scorie à durcissement ultra rapide pouvant être obtenue par le procédé selon l'une quelconque des revendications 1 à 3.

**5.** Scorie à durcissement ultra rapide selon la revendication 4, qui est réduite en poudre, présente une surface spécifique Blaine de 4 000 à 9 000 $cm^2$/g, et présente une teneur en particules supérieure à 30 $\mu$m qui est d'au plus 10 % sur une base en masse.

**6.** Scorie à durcissement ultra rapide selon la revendication 4 ou 5, qui présente une teneur en particules ayant une granulométrie inférieure à 1,0 $\mu$m qui est d'au plus 10 % sur une base en masse.

7. Composition de ciment obtenue par incorporation de la scorie à durcissement ultra rapide telle que définie dans l'une quelconque des revendications 4 à 6.

8. Composition de ciment selon la revendication 7, qui contient du gypse en une quantité de 25 à 200 parties en masse pour 100 parties en masse de la scorie à durcissement ultra rapide.

9. Liant comprenant la composition de ciment telle que définie dans la revendication 7 ou 8.

10. Liant selon la revendication 9, contenant en outre au moins un membre choisi dans l'ensemble constitué par un modificateur de prise, une substance moussante libérant un gaz et un agrégat fin, et contenant en outre un agent réduisant l'eau le cas échéant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3012350 A
- JP 1230455 A
- JP 11139859 A
- US 903019 A
- JP 1290543 A
- JP 2005075712 A
- JP 2007320835 A

- JP H05139795 B
- JP 2007320833 A
- JP 2010189226 A
- JP 2007320834 A
- JP 2006104013 A
- JP 2008031007 A
- JP 7178371 A